# EUROPEAN PATENT SPECIFICATION

(11) **EP 3 471 118 B1**
(45) Date of publication and mention of the grant of the patent: **12.01.2022**
(21) Application number: 16904527.5
(22) Date of filing: 08.06.2016
(51) Int. Cl.: H01G 4/38, H01G 4/32, H01G 15/00, H01G 4/28

(54) **THREE-PHASE CAPACITOR FORMED BY THREE CYLINDERS CONNECTED TO FORM A TRIANGLE**
DREIPHASIGER KONDENSATOR, DER DURCH DREI MITEINANDER VERBUNDE ZYLINDER IN FORM EINES DREIECKS GEFORMT WIRD
CONDENSATEUR TRIPHASÉ FORMÉ DE TROIS CYLINDRES CONNECTÉS EN TRIANGLE

(43) Date of publication of application: 17.04.2019
(73) Proprietor: RTR Energia, S.L., 28320 Pinto Madrid (ES)
(72) Inventor: NUÑEZ- BARRANCO PATIÑO, Cesar, 28320 Pinto Madrid (ES)
(74) Representative: López Camba, Emilia
(86) International application number: PCT/ES2016/070431
(87) International publication number: WO 2017/212082

(56) References cited:
- EP-A1- 2 654 051
- EP-A1- 2 654 051
- EP-A2- 1 033 730
- CN-U- 202 230 882
- CN-U- 203 351 426
- CN-U- 204 102 717
- FR-A1- 2 927 727
- GB-A- 2 006 526
- JP-A- H05 226 183
- JP-A- 2002 222 731
- US-A- 3 829 941
- US-A1- 2008 100 993
- US-A1- 2013 194 712

## Description

### OBJECT OF THE INVENTION

The object of the present invention, as described by the title thereof, is a three-phase capacitor formed by three cylinders connected to form a triangle and each one of the cylinders comprises two capacitors arranged in series, such that a high-power three-phase capacitor for both direct current and alternating current is achieved.

The present invention is characterized by the special configuration and design of the three-phase capacitor that comprises three cylinders wherein each cylinder in turn comprises two capacitors arranged in series with the aim of allowing the functioning thereof in systems that require a high power capacity. The three cylinders are duly connected to one another with the aim of achieving a triangular connection.

Therefore, the present invention falls within the field of fixed capacitors, specifically wound capacitors, wherein the metal plates are wound over a dielectric sheet to form a compact cylinder which is generally introduced in a metal case and then it is sealed with a filler to protect it from moisture, oxidation and electrical effects, or by means of gas.

### BACKGROUND OF THE INVENTION

Three-phase capacitors with a cylindrical geometry made in a single piece that have been manufactured up to the present allow for only one star connection.

The manufacture of three-phase capacitors with a cylindrical geometry is done by arranging an insulating material, preferably silicone coated, after winding the metal sheets, separated by waxed paper sheets, a certain number of times. The insulating material placed between the annular cylinders formed by winding protrudes from both faces of the final cylinder formed. The protruding insulating material is then cut from one of the faces of the cylinder, making it flush with the edge of the annular cylinders, and subsequently said face is coated with a lower film or layer of conductive material that gives the plates of each of the formed capacitors the same potential, thereby achieving a star connection.

In the state of the art the following patents related to three-phase capacitors are known:
- ES2546686 A1, related to a " cylindrical three-phase capacitor connected to form a triangle".
- ES 1076106 U, which describes a three-phase capacitor formed by two aligned cylinders.
- WO/2013/104808 A1 (EP 2654051), which relates to a three-phase capacitor formed by two aligned cylinders with overpressure disconnection.
- EP 2654051 which discloses a three-phase capacitor formed by two aligned cylinders.

CN203351426U which discloses a thin film capacitor. The thin film capacitor comprises a shell, leading-out terminals, an insulating positioning cover, connecting copper strips and capacitor chip units;

The energy storage capacity of capacitors is directly proportional to the value of the capacity and quadratically proportional to the value of the voltage to which they are subjected, and for high-voltage systems, capacitors must be designed to be able to withstand the operating voltage, a fact that constructively limits the same, making it difficult to achieve capacitors with high energy storage capacity in high-voltage systems, rather the constructive characteristics thereof consist of a limiting design.

Therefore, the object of the invention is to develop a three-phase capacitor connected to form a triangle with high-energy storage capacity for high voltage systems, developing a capacitor such as that which is described below, the essential nature of which is established in the first claim.

### DESCRIPTION OF THE INVENTION

The capacitor according to the invention is defined by the features of claim 1. It Z is a three-phase capacitor formed by three cylinders, each one of them manufactured in a single piece and connected to form a triangular or delta connection.

Each cylinder is made up of two annular windings, concentrically arranged with each one being separated with respect to the contiguous cylinder thereof by an insulating material that dielectrically isolates a capacitor with respect to the cylinder contiguous to the same and which furthermore allows for the axial movement of one capacitor with respect to the other.

The two capacitors defined in each of the cylinders are arranged in series, such that the total capacity of the two capacitors is half the capacity of each one, whereas the voltage to which they can be subjected is twice the voltage of each one of them individually, and given that the energy storage capacity is quadratic with voltage, an increase in stored energy is achieved.

Each one of the capacitors is separated from the adjacent capacitor thereof by a flat insulating material with very low coefficient of friction, with the aim of allowing the inner part be able to move with respect to the outer part in the case of inner overpressure, and which in a possible embodiment is coated with silicone.

The upper parts of each of the concentric annular rings of each cylinder make up one of the connection plates of each one of the capacitors, while the lower parts make up the other plates of each one of the capacitors.

The three cylinders are identical and duly connected to each other forming a triangular assembly.

As was previously mentioned, each cylinder has two concentrically arranged capacitors, one inner capacitor and another outer capacitor, the plates of one of the faces thereof joined by means of a conductive surface with the aim of arranging both capacitors of each cylinder in series.

With the aim of achieving a triangular connection of the capacitors of each cylinder, the first cylinder is connected to one of the plates of the next cylinder, this second cylinder being connected to the third cylinder, and this third cylinder connected to the first.

To be able to achieve the equipotential bonding of two contiguous annular rings, on each one of the faces a particular arrangement of insulating material arranged between two contiguous annular rings is necessary, such that it remains flush with the edge of the rings that are connected by a conductive layer, protruding in the rest of the connections, and thus it is necessary that the supply roll of insulating material move longitudinally along the axis thereof with the aim of achieving the relative positioning of the insulation with respect to the annular rings.

Due to the described configuration, a three-phase capacitor formed by three cylinders is achieved, wherein each cylinder comprises two capacitors arranged in an annular way and connected in series, the cylinders being connected to one another forming a triangular connection, the final assembly having a high energy capacity, able to be applied in high voltages of both alternating current and direct current, and particularly in sectors such as the rail and automotive sectors, as well as that of wind turbines, as a means for filtering and correcting the power factor, for industrial use, etc.

### EXPLANATION OF THE DRAWINGS

As a complement to the description made below, and for the purpose of helping to make the characteristics of the invention more readily understandable, said description is accompanied by a set of drawings whose figures, by way of illustration and not limitation, represent the most significant details of the invention.
Figure 1 shows a schematic representation of a three-phase capacitor connected to form a triangle, wherein between each two phases there are two capacitors connected in series.
Figure 2 shows a perspective representation of the three-phase capacitor formed by three cylinders and the connections thereof.

### PREFERRED EMBODIMENT OF THE INVENTION

With reference to the figures, a preferred embodiment of the invention proposed is described below.

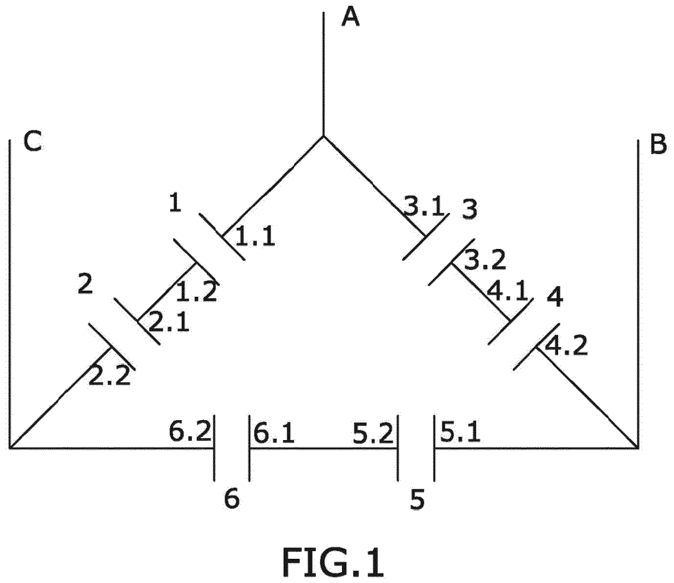

Figure 1 shows a three-phase capacitor connected to form a triangle, formed by a first capacitor (1) which has a first plate (1.1) and a second plate (1.2); a second capacitor (2) comprising a first plate (2.1) and a second plate (2.2); a third capacitor (3) comprising a first plate (3.1) and a second plate (3.2); a fourth capacitor (4) having a first plate (4.1) and a second plate (4.2); a fifth capacitor (5) comprising a first plate (5.1) and a second plate (5.2); and a sixth capacitor (6) comprising a first plate (6.1) and a second plate (6.2), such that the first (1) and second (2) capacitors are connected in series between phase (A) and (C), whereas the third and fourth capacitors (3) and (4) are connected in series between phases (A) and (B), and the fifth capacitor (5) and the sixth capacitor (6) are connected in series between phases (B) and (C).

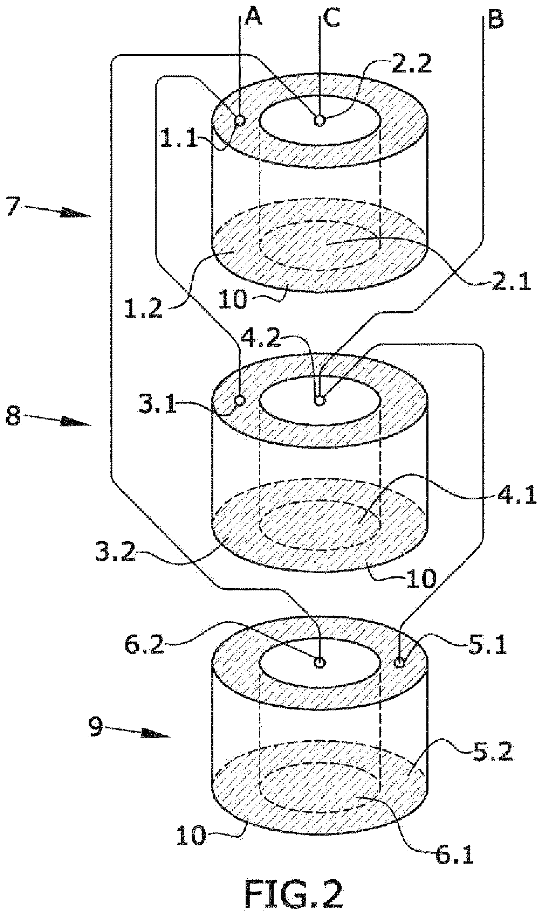

In figure 2 we can see that the three-phase capacitor object of the invention comprises three cylinders (7), (8) and (9), wherein each one of them comprises two capacitors in an annular ring shape, concentrically arranged, each one separated with respect to the contiguous cylinder thereof by an insulating material that dielectrically isolates a capacitor with respect to the contiguous capacitor thereof, there being both an inner capacitor and outer capacitor; wherein the inner cylindrical capacitor of each cylinder comprises a first plate and a second plate, while the outer capacitor of each cylinder comprises a first plate and a second plate, wherein one of the plates of the outer capacitors is connected to the adjacent plate of the inner capacitor by means of a conductive layer, while the plates that are not electrically bonded have the function of connecting the phases as well as the plates of the contiguous cylinders.

In figure 2 one can see that in the cylinders (7), (8) and (9) the second plate (1.2), (3.2) and (5.2) of the first (1), third (3) and fifth capacitor (5) are joined to the first plate (2.1) (4.1) and (6.1) of the second (2), fourth (4) and sixth (6) capacitor, respectively, given that the free edge of the plates is coated with a conductive layer (10) and the insulating material between both capacitors, the same do not emerge from the free edge thereof, wherein moreover, in the first cylinder (7), the first plate (1.1) of the first capacitor (1) is joined to the phase (A) and to the first plate (3.1) of the third capacitor (3), while the second plate (2.2) of the second capacitor (2) is joined to the phase (C) and to the second plate of the sixth capacitor (6), whereas the second plate (4.2) of the fourth capacitor (4) is joined to the phase (B) and to the first plate (5.1) of the fifth capacitor (5). When reference is made to the insulating material that does not protrude from the plates, an arrangement is sought that on the one hand enables an electric bonding of the free edge of the plates, in addition to electrically isolating the capacitors and allowing relative movement between them in the case of overvoltage and subsequent disconnection, thereby preventing an explosion.

## Claims

1. A three-phase capacitor formed by three cylinders, a first cylinder (7), a second cylinder (8) and a third cylinder (9), connected to form a triangle, wherein each one of the cylinders, (7), (8) and (9) is manufactured in a single piece, and they are connected to one another forming a triangular or delta connection and wherein the first cylinder (7) has a first capacitor (1) and a second capacitor (2) connected in series, the second cylinder (8) having a third (3) and fourth capacitor (4) connected in series and the third cylinder (9) having a fifth (5) and sixth capacitor (6) also connected in series, wherein the capacitors of each cylinder are formed by two annular windings, concentrically arranged, and each one separated with respect to the contiguous cylinder thereof by an insulating material that dielectrically isolates a capacitor with respect to the contiguous cylinder, wherein there is an inner capacitor and an outer capacitor,
and the upper parts of each of the concentric annular rings of each cylinder make up one of the connection plates of each one of the capacitors, wherein the inner cylindrical capacitor (2), (4) and (6) of each cylinder, namely the first cylinder (7), the second cylinder (8) and the third cylinder (9) comprises a first plate (2.1) (4.1) and (6.1) and a second plate (2.2), (4.2) and (6.2), while each outer capacitor (1), (3) and (5) of each cylinder (7), (8) and (9) comprises a first plate (1.1) (3.1), (5.1) and a second plate (1.2), (3.2) and (5.2) wherein one of the plates of the outer capacitor of each cylinder is connected to the adjacent plate of the inner capacitor by means of a conductive layer (10), wherein the insulating material has a very low coefficient of friction, which allows the inner part to be able to move with respect to the outer part of each cylinder in the case of inner overpressure.

2. The three-phase capacitor formed by three cylinders connected to form a triangle according to claim 1, **characterized in that** in the cylinders (7), (8) and (9), the second plate (1.2), (3.2) and (5.2) of the first (1), third (3) and fifth capacitor (5) are joined to the first plate (2.1) (4.1) and (6.1) of the second (2), fourth (4) and sixth (6) capacitor, given that the free edge of the plates is coated with a conductive layer (10) and the insulating material between both capacitors, the same do not emerge from the free edge thereof, wherein moreover, in the first cylinder (7), the first plate (1.1) of the first capacitor (1) is joined to a phase (A) and to the first plate (3.1) of the third capacitor (3), while the second plate (2.2) of the second capacitor (2) is joined to a phase (C) and to the second plate of the sixth capacitor (6), whereas the second plate (4.2) of the fourth capacitor (4) is joined to a phase (B) and to the first plate (5.1) of the fifth capacitor (5).

## Patentansprüche

1. Ein dreiphasiger Kondensator, der durch drei Zylinder geformt wird, einem ersten Zylinder (7), einem zweiten Zylinder (8) und einem dritten Zylinder (9), die in Form eines Dreiecks miteinander verbunden sind, wobei jeder der Zylinder (7), (8) und (9) in einem Stück hergestellt ist und sie miteinander verbunden sind, um eine Dreieck- oder Deltaverbindung zu bilden, und wobei der erste Zylinder (7) einen ersten Kondensator (1) und
einen zweiten Kondensator (2) aufweist, die in Reihe geschaltet sind, wobei der zweite Zylinder (8) einen dritten (3) und vierten Kondensator (4) aufweist, die in Reihe geschaltet sind, und der dritte Zylinder (9) einen fünften (5) und sechsten Kondensator (6) aufweist, die ebenfalls in Reihe geschaltet sind, wobei die Kondensatoren jedes Zylinders durch zwei ringförmige Wicklungen gebildet sind, die konzentrisch angeordnet sind und jeweils in Bezug auf den angrenzenden Zylinder davon durch ein Isoliermaterial getrennt sind, das einen Kondensator in Bezug auf den angrenzenden Zylinder dielektrisch isoliert, wobei ein innerer Kondensator und ein äußerer Kondensator vorhanden sind,
und die oberen Teile jedes der konzentrischen ringförmigen Ringe jedes Zylinders eine der Anschlussplatten jedes der Kondensatoren bilden,
wobei
der innere zylindrische Kondensator (2), (4) und (6) jedes Zylinders, nämlich der erste Zylinder (7), der zweite Zylinder (8) und der dritte Zylinder (9) eine erste Platte (2.1) (4.1) und (6.1) und eine zweite Platte (2.2), (4.2) und (6.2) umfassen, während jeder äußere Kondensator (1), (3) und (5) jedes Zylinders (7), (8) und (9) eine erste Platte (1.1) (3.1), (5.1) und eine zweite Platte (1.2), (3.2) und (5.2) umfasst, wobei eine der Platten des äußeren Kondensators jedes Zylinders mit der benachbarten Platte des inneren Kondensators mittels einer leitenden Schicht (10) verbunden ist,
wobei das Isoliermaterial einen sehr geringen Reibungskoeffizienten aufweist, der es dem Innenteil ermöglicht, sich bei innerem Überdruck gegenüber dem Außenteil jedes Zylinders zu bewegen.

2. Der dreiphasige Kondensator, der durch drei miteinander verbundene Zylinder in Form eines Dreiecks geformt wird, nach Anspruch 1, **dadurch gekennzeichnet, dass** in den Zylindern (7), (8) und (9) die zweite Platte (1.2), (3.2) und (5.2) des ersten (1), des dritten (3) und des fünften Kondensators (5) mit der ersten Platte (2.1) (4.1) und (6.1) des zweiten (2), des vierten (4) und des sechsten (6) Kondensators verbunden sind, wobei der freie Rand der Platten mit einer leitenden Schicht (10) beschichtet ist und das Isoliermaterial zwischen den beiden Kondensatoren nicht aus dem freien Rand derselben austritt, wobei außerdem in dem ersten Zylinder (7) die erste Platte (1.1) des ersten Kondensators (1) mit einer Phase (A) und mit der ersten Platte (3.1) des dritten Kondensators (3) verbunden ist, während die zweite Platte (2.2) des zweiten Kondensators (2) mit einer Phase (C) und mit der zweiten Platte des sechsten Kondensators (6) verbunden ist, während die zweite Platte (4.2) des vierten Kondensators (4) mit einer Phase (B) und mit der ersten Platte (5.1) des fünften Kondensators (5) verbunden ist.

## Revendications

1. Un condensateur triphasé formé de trois cylindres, un premier cylindre (7), un deuxième cylindre (8) et un troisième cylindre (9), connectés en triangle, dans lequel chacun des cylindres (7), (8) et (9) est fabriqué en une seule pièce, et ils sont connectés l'un à l'autre en formant une connexion triangulaire ou en triangle et dans lequel le premier cylindre (7) a un premier condensateur (1) et un deuxième condensateur (2) connectés en série, le deuxième cylindre (8) ayant un troisième (3) et un quatrième condensateur (4) connectés en série et le troisième cylindre (9) ayant un cinquième (5) et un sixième condensateur (6) également connectés en série, dans lequel les condensateurs de chaque cylindre sont formés par deux enroulements annulaires, disposés concentriquement, et chacun séparé par rapport au cylindre contigu de celui-ci par un matériau isolant qui isole diélectriquement un condensateur par rapport au cylindre contigu, dans lequel il y a un condensateur interne et un condensateur externe,
et les parties supérieures de chacune des bagues annulaires concentriques de chaque cylindre constituent l'une des plaques de connexion de chacun des condensateurs,
dans lequel
le condensateur cylindrique intérieur (2), (4) et (6) de chaque cylindre, à savoir le premier cylindre (7), le deuxième cylindre (8) et le troisième cylindre (9), comprend une première plaque (2.1) (4.1) et (6.1) et une deuxième plaque (2.2), (4.2) et (6.2), tandis que chaque condensateur extérieur (1), (3) et (5) de chaque cylindre (7), (8) et (9) comprend une première plaque (1.1) (3.1), (5.1) et une deuxième plaque (1.2), (3.2) et (5.2), l'une des plaques du condensateur extérieur de chaque cylindre étant reliée à la plaque adjacente du condensateur intérieur au moyen d'une couche conductrice (10),
dans lequel le matériau isolant a un très faible coefficient de frottement, ce qui permet à la partie interne de pouvoir se déplacer par rapport à la partie externe de chaque cylindre en cas de surpression interne.

2. Condensateur triphasé formé par trois cylindres connectés en triangle selon la revendication 1, **caractérisé en ce que** dans les cylindres (7), (8) et (9), la deuxième plaque (1.2), (3.2) et (5.2) des premier (1), troisième (3) et cinquième condensateurs (5) sont reliées à la première plaque (2.1) (4.1) et (6.1) des deuxième (2), quatrième (4) et sixième (6) condensateurs, étant donné que le bord libre des plaques est revêtu d'une couche conductrice (10) et que le matériau isolant entre les deux condensateurs, ceux-ci ne sortent pas du bord libre de ceux-ci, dans lequel en outre, dans le premier cylindre (7), la première plaque (1.1) du premier condensateur (1) est reliée à une phase (A) et à la première plaque (3.1) du troisième condensateur (3), tandis que la deuxième plaque (2.2) du deuxième condensateur (2) est reliée à une phase (C) et à la deuxième plaque du sixième condensateur (6), tandis que la deuxième plaque (4.2) du quatrième condensateur (4) est reliée à une phase (B) et à la première plaque (5.1) du cinquième condensateur (5).
